# EUROPÄISCHE PATENTANMELDUNG

(11) **EP 1 559 992 A1**
(43) Veröffentlichungstag der Anmeldung: **03.08.2005**
(21) Anmeldenummer: 05001178.2
(22) Anmeldetag: 21.01.2005
(51) Int. Cl.: G01B 11/06, G01B 11/02, G01N 21/86, D21F 7/06, D21G 9/00

(54) **Vorrichtung zur Erleichterung der Einstellung eines von der Dicke einer Produktbahn abhängigen Systems**

(30) Priorität: 27.01.2004 DE 102004004012
(71) Anmelder: MAN Roland Druckmaschinen AG, 63012 Offenbach (DE)
(72) Erfinder: Keilhau, Theo, 83356 Neusäss (DE); Erdt, Johann, 86161 Augsburg (DE); Braun, Alfred, 86441 Zusmarshausen (DE); Nachtigall, Manfred, 86343 Königsbrun (DE)
(74) Vertreter: Zacharias, Frank L.

(57) **Zusammenfassung**

Bei einer Vorrichtung zur Erleichterung der Einstellung eines von der Dicke einer Produktbahn abhängigen Systems einer Produktbahn-Bearbeitungsmaschine ist beiderseits der Produktbahn je ein einen Sender und einen Empfänger aufweisender Messkopf angeordnet, wobei der Sender einen schräg zur Produktbahn gerichteten, von dieser reflektierten Strahl aussendet, der in Abhängigkeit von der Dicke der Produktbahn an unterschiedlichen Stellen des Empfängers auftrifft und dadurch unterschiedliche Messwerte erzeugt, und dass den beiden Empfängern ein aus den beiden Messwerten ein der Bahndicke proportionales Messsignal bildender Rechner nachgeschaltet ist.

## Beschreibung

Die Erfindung betrifft eine Vorrichtung zur Erleichterung der Einstellung eines von der Dicke einer Produktbahn abhängigen Systems einer Produktbahn-Bearbeitungsmaschine.

Die Dicke der Produktbahn ist bisher bei stillstehender Bahn mittels eines von Hand an die Bahn anzusetzenden Messgerätes ermittelt worden.

Der Erfindung liegt die Aufgabe zugrunde, eine Vorrichtung der eingangs genannten Gattung zu schaffen, mit der eine kontaktlose, während des Bahnlaufs durchführbare Messung der Bahndicke mit anschließender Anzeige zur manuellen Einstellung oder zur automatischen Einstellung durchgeführt werden kann.

Erfindungsgemäß wird dies dadurch erreicht, dass beiderseits der Produktbahn je ein einen Sender und einen Empfänger aufweisender Messkopf angeordnet ist und der Sender einen schräg zur Produktbahn gerichteten, von dieser reflektierten Strahl aussendet, der in Abhängigkeit von der Dicke der Produktbahn an unterschiedlichen Stellen des Empfängers auftrifft und dadurch unterschiedliche Messwerte erzeugt und den beiden Empfängern ein aus den beiden Messwerten ein der Bahndicke proportionales Messsignal bildender Rechner nachgeschaltet ist.

Mit einer derartigen Vorrichtung kann, ohne dass eine Bedienungsperson zur Messung an die Produktbahn herangehen muss, eine Dickenmessung erfolgen. Dabei erfolgt die Dickenmessung berührungsfrei, so dass keine Einwirkungen auf die Produktbahn durch die Messung erfolgen. Weiterhin kann die Messung sowohl bei stillstehender als auch bei laufender Produktbahn erfolgen.

Vorzugsweise sind die beiden Sender der Messköpfe auf eine Bahndicke von Null justiert. Vorteilhaft sind dabei die Messköpfe auf einen Messbereich ausgelegt, der ein Flattern der Produktbahn zulässt. Die Produktbahn muss sich also bei einer Messung nicht genau mittig zwischen den beiden Messköpfen befinden, so dass die Vorrichtung auch an einem gut zugänglichen, längeren freilaufenden Abschnitt der Produktbahn angeordnet werden kann.

Nach einer bevorzugten Ausführungsform der Erfindung wird das Messsignal zur Ansteuerung eines Stellantriebes für mindestens ein von der Bahndicke abhängiges System der Bearbeitungsmaschine verwendet. Es ist daher nicht nur eine ohne Einsatz einer Bedienungsperson durchzuführende Dickenmessung möglich, mit deren Stellwert dann entsprechende Systeme der Bearbeitungsmaschine von Hand eingestellt werden, sondern auch eine vollautomatische Einstellung dieser Systeme.

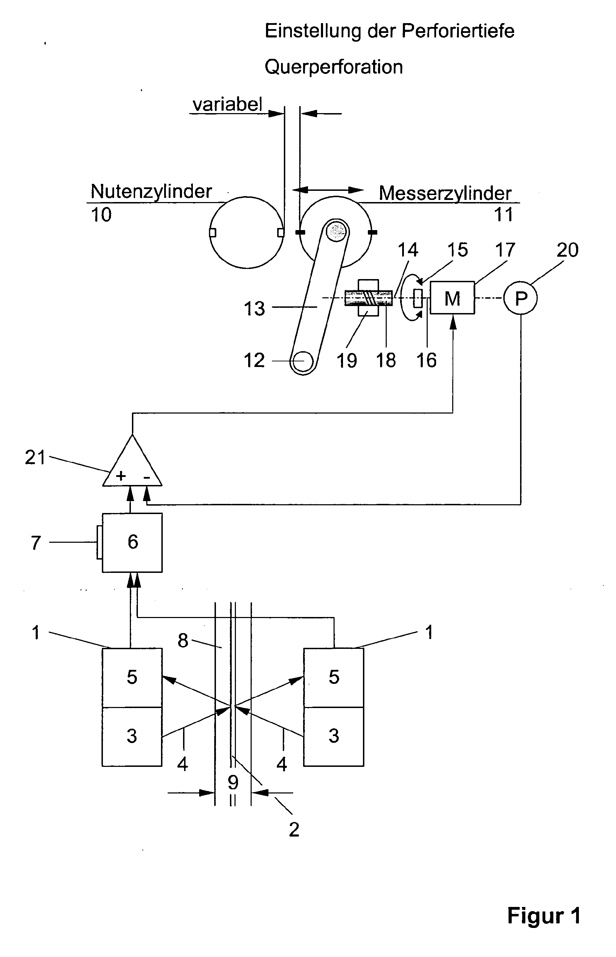

Weitere Merkmale und Vorteile der Erfindung ergeben sich aus den zusätzlichen Unteransprüchen und der nachfolgenden Beschreibung mehrerer Ausführungsbeispiele der Erfindung anhand der Zeichnung. Diese zeigtin den Figuren 1 bis 4 jeweils schematisch den Aufbau von erfindungsgemäßen Vorrichtungen.

Die Vorrichtung nach Figur 1 weist zwei insgesamt mit 1 bezeichnete Messköpfe auf, die in gleichen Abständen beiderseits der idealen Laufebene einer Produktbahn 2 angeordnet sind. Dabei kann die Produktbahn 2 aus mehreren Lagen bestehen. Jeder Messkopf 1 weist einen Sender 3 auf. Jeder Sender 3 sendet einen schräg zur Produktbahn 2 gerichteten, gebündelten Strahl 4 aus. Jeder Strahl 4 wird an der Produktbahn 2 reflektiert. Der reflektierte Teil trifft auf einen Empfänger 5 jedes Messkopfes 1. Je nach der Dicke der Produktbahn 2 trifft also der reflektierte Teil des Strahles 4 an einer unterschiedlichen Stelle des Empfängers 5 auf und ruft hier je nach der Auftreffstelle einen unterschiedlichen Messwert hervor. Es hat sich als vorteilhaft herausgestellt, dass die beiden Sender 3 der Messköpfe 1 nach dem Einbau auf eine Bahndicke von Null justiert werden. Weiterhin ist der Empfangsbereich der Empfänger 5 so ausgelegt, dass die reflektierten Strahlen 4 auch dann noch erfasst werden, wenn die Produktbahn 2 innerhalb eines durch die Begrenzungslinien 8 angedeuteten Messbereichs 9 flattert. Die Messwerte der beiden Empfänger 5 werden dann zu einem Rechner 6 geführt, der aus den beiden Messwerten ein Messsignal erzeugt. Dieses Messsignal kann im einfachsten Fall zu einem Anzeigeinstrument 7 geführt werden, von dem es abgelesen und dann zur Einstellung eines oder mehrer von der Bahndicke abhängigen Systemen der Bearbeitungsmaschine verwendet wird.

Vorteilhaft wird aber das Messsignal zur automatischen Einstellung von Systemen verwendet, die von der Bahndicke abhängig sind.

Figur 1 zeigt ein System zur Einstellung der Perforiertiefe eines Perforiersystems in einem Falzwerk einer RollenrotationsDruckmaschine mit einem ortsfest gelagerten Nutenzylinder 10 und einem einstellbaren Perforiermesserzylinder 11. Dieser Zylinder ist drehbar in einem um einen ortsfesten Zapfen 12 schwenkbaren Hebel 13 gelagert. Am Hebel 13 ist das eine Ende einer Stellwelle 14 angelenkt, deren anderes Ende über eine Kupplung 15 mit einer Welle 16 eines Stellantriebes 17 verbunden ist. Die Kupplung 15 lässt axiale Bewegungen der Stellwelle 14 gegenüber Welle 16 zu. Der Stellantrieb 17 ist als Elektromotor gegebenenfalls mit einem Untersetzungsgetriebe ausgebildet. Mit der Stellwelle 14 ist eine Gewindespindel 18 fest verbunden, die in ein ortsfestes Gewindelager 19 eingreift. Eine Drehung der Wellen 14, 16 ruft daher eine Schwenkung des Hebels 13 und damit eine Einstellung des Spaltes zwischen den Zylindern 10 und 11 hervor.

Mit der Welle 16 des Stellantriebs 17 ist ein Potentiometer 20 verbunden, das die Drehlage der Wellen 16, 14 erfasst und daher einen Messwert abgibt, der der Drehlage der Wellen entspricht und daher der Schwenkung des Hebels 13 mit dem Messerzylinder 11 proportional ist. Dieser Messwert wird zusammen mit dem vom Rechner 6 produzierten Messsignal einen Komparator 21 zugeleitet. Erhält der Komparator 21 ein Messsignal, so läuft der Motor des Stellantriebs 14 an und verstellt dabei über die Gewindespindel 18 den Messerzylinder 11. Stimmt der vom Potentiometer 20 gelieferte Messwert mit dem Messsignal des Rechners 6 überein, so wird der Stellantrieb 14 abgeschaltet. Der Messerzylinder 11 ist nunmehr auf die gewünschte Spaltbreite zum Nutenzylinder 10 eingestellt.

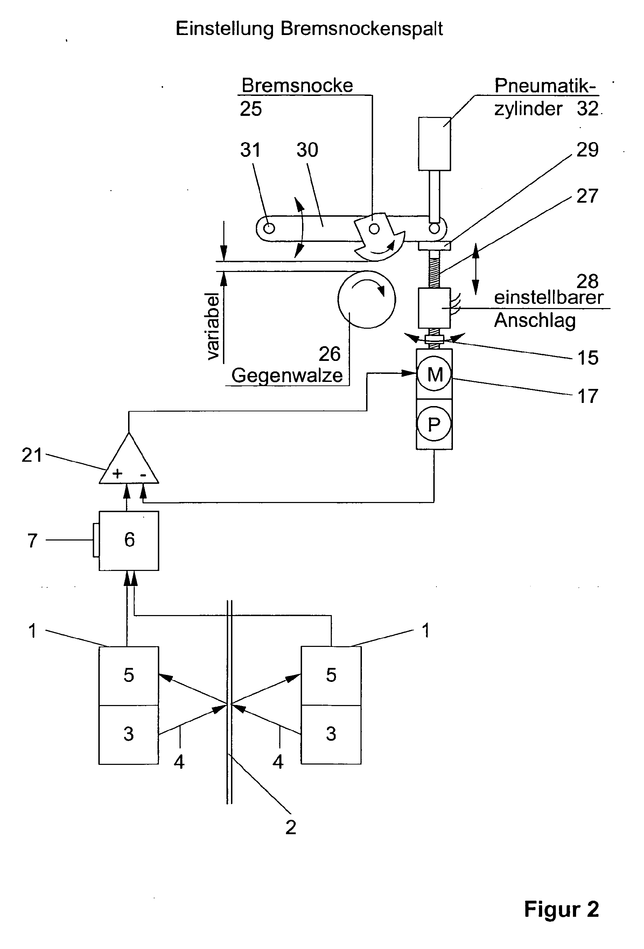

Figur 2 zeigt die Anordnung eines Systems zum Abbremsen eines Produkts mit einer Bremsnocke 25 und einem Gegenzylinder 26, die beide rotierend angetrieben sind. Hier wird vom Stellantrieb 17 über die Kupplung 15 eine Gewindespindel 27 angetrieben, die in ein ortsfestes Gewindelager 28 eingreift. Auf die Gewindespindel 27 ist ein Anschlag 29 aufgesetzt, der mit einem einarmigen Hebel 30 zusammenwirkt. Der Hebel 30 ist um einen ortsfesten Zapfen 31 drehbar und dient zur Lagerung des Bremsnockens 25. Am Hebel 30 greift ein Pneumatikzylinder 32 an, der den Hebel 30 elastisch in Anlage am Anschlag 29 hält. Auch hier wird beim Einschalten des Stellantriebs 17 durch Drehung der Gewindespindel 27 im Gewindelager 28 der Hebel 30 um den Zapfen 31 geschwenkt und damit der Spalt zwischen der Bremsnocke 25 und dem Gegenzylinder 26 eingestellt.

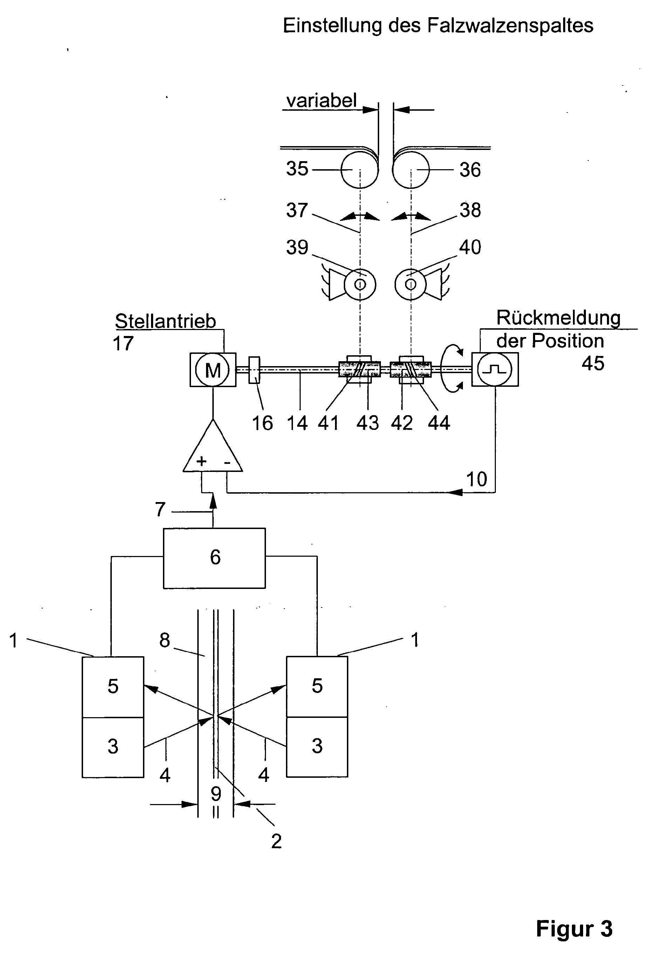

Figur 3 zeigt ein System zur gleichzeitigen Einstellung zweier zwischen sich einen Spalt begrenzenden Walzen 35, 36. Im dargestellten Beispiel handelt es sich dabei um die Walzen einer Längsfalzvorrichtung. In gleicher Weise können jedoch auch Einzugswalzen eingestellt werden. Hier ist jede der Walzen 35, 36 am einen Ende eines zweiarmigen Hebels 37, 38 gelagert. Jeder der Hebel 37, 38 ist um einen ortsfesten Zapfen 39, 40 schwenkbar und trägt an seinem anderen Ende ein Gewindelager 41, 42. In jedes Gewindelager 4, 42 greift in je eine Gewindespindel 43, 44 ein. Dabei weisen die Gewindespindeln 43, 44 gegenläufige Gewinde auf. Die Gewindespindeln 43, 44 sind wiederum auf die Stellwelle 14 aufgesetzt, die über die Kupplung 15 vom Stellantrieb 17 angetrieben werden kann. Bei dieser Anordnung ist das Potentiometer 45 auf das freie Ende der Stellwelle 14 aufgesetzt.

Wird der Stellantrieb 17 eingeschaltet, so werden die Hebel 37, 38 über die Gewindespindeln 43, 44 in entgegengesetzten Richtungen um die Zapfen 39, 40 gedreht, so dass die Walzen 35, 36 sich zur Einstellung des Spaltes gegenläufig bewegen. Die Steuerung der Stellantriebs 17 erfolgt wiederum in der im Zusammenhang mit der Figur 1 beschriebenen Weise.

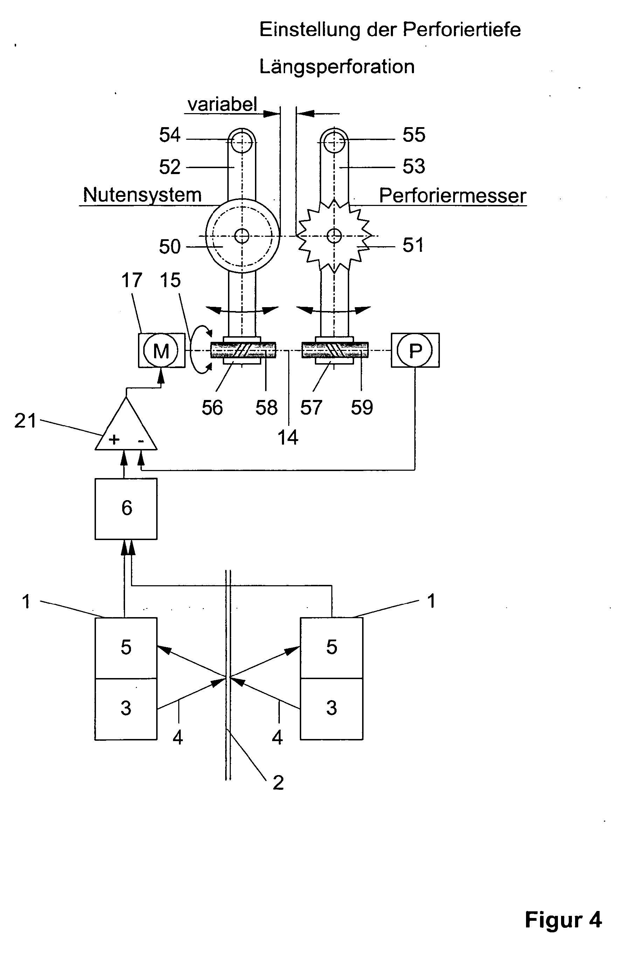

Figur 4 zeigt ein System zur Herstellung einer Längsperforation. Hier sind eine Nutenwalze 50 und eine Perforiermesserwalze 51 je auf einen einarmigen Hebel 52, 53 aufgesetzt. Jeder Hebel ist um einen festen Zapfen 54, 55 schwenkbar angeordnet. Am freien Ende jedes Hebels 52, 53 ist wiederum je ein Gewindelager 56, 57 angebracht, in das je eine Gewindespindel 58, 59 eingreift. Die Gewindespindeln 58, 59 sind fest auf der Stellwelle 14 angeordnet, die über die Kupplung 15 vom Stellantrieb 17 in Drehung versetzt werden kann.

Dreht sich die Stellwelle 14, so werden über die Gewindespindeln 58, 59 und die Gewindelager 56, 57 die Hebel 52, 53 in entgegengesetzten Richtungen geschwenkt. Hierdurch wird die Größe des Spaltes zwischen den Walzen 50, 51 eingestellt. Die Ansteuerung des Stellantriebs 17 erfolgt wiederum in der im Zusammenhang mit der Figur 1 beschriebenen Weise.

Die Erfindung ist nicht auf die dargestellten Ausführungsbeispiele beschränkt, sondern kann auch bei anderen auf die Bahndicke einstellbaren Systemen, beispielsweise zur Einstellung des Falzkupplungsspalts angewendet werden.

## Patentansprüche

1. Vorrichtung zur Erleichterung der Einstellung eines von der Dicke einer Produktbahn abhängigen Systems einer Produktbahn-Bearbeitungsmaschine, **dadurch gekennzeichnet, dass** beiderseits der Produktbahn (2) je ein einen Sender (3) und einen Empfänger (5) aufweisender Messkopf (1) angeordnet ist und der Sender (3) einen schräg zur Produktbahn (2) gerichteten, von dieser reflektierten Strahl (4) aussendet, der in Abhängigkeit von der Dicke der Produktbahn (2) an unterschiedlichen Stellen des Empfängers (5) auftrifft und dadurch unterschiedliche Messwerte erzeugt, und den beiden Empfängern (5) ein aus den beiden Messwerten ein der Bahndicke proportionales Messsignal bildender Rechner (6) nachgeschaltet ist.

2. Vorrichtung nach Anspruch 1, **dadurch gekennzeichnet, dass** die beiden Sender (3) der Messköpfe (1) auf eine Bahndicke von Null justiert sind.

3. Vorrichtung nach Anspruch 1 oder 2, **dadurch gekennzeichnet, dass** die Messköpfe (1) auf einen Messbereich (9) ausgelegt sind, der ein Flattern der Produktbahn (2) zulässt.

4. Vorrichtung nach einem der vorhergehenden Ansprüche, **dadurch gekennzeichnet, dass** das Messsignal zur Ansteuerung eines Stellantriebes (17) für mindestens ein von der Bahndicke abhängiges System der Bearbeitungsmaschine verwendet wird.

5. Vorrichtung nach Anspruch 4, **dadurch gekennzeichnet, dass** das von dem Rechner (6) gelieferte Messsignal mit einem durch ein Potentiometer (20) gelieferten, der Stellung des von der Bahndicke abhängigen Systems proportionalen Messwert in einen Komparator (21) verglichen und zu einem Stellwert für einen Stellantrieb (17) verarbeitet wird.

6. Vorrichtung nach Anspruch 4 oder 5, **dadurch gekennzeichnet, dass** der Stellantrieb (17) einen Elektromotor aufweist.

7. Vorrichtung nach einem der Ansprüche 4 bis 6, **dadurch gekennzeichnet, dass** die Welle des Stellantriebs (17) mit dem die Stellbewegung erfassenden Potentiometer (20) verbunden ist und das Potentiometer ein die Stellbewegung bei Erreichen des Wertes des Messsignals beendenden Komparator (21) ansteuert.

8. Vorrichtung nach einem der Ansprüche 4 bis 7, **gekennzeichnet durch** die Anwendung für ein von der Produktbahndicke abhängiges System eines Falzwerkes einer RollenrotationsDruckmaschine.

9. Vorrichtung nach einem der Ansprüche 4 bis 8, **dadurch gekennzeichnet, dass** zur Einstellung der Perforiertiefe eines Querperforiersystems die vom Stellantrieb (17) angetriebene Stellwelle (14) mit einer in einem ortsfesten Gewindelager (19) geführten Gewindespindel (18) mit Schrägverzahnung verbunden ist und die Stellwelle mittig an einem einarmigen Hebel (13) angreift, dessen eines Ende um einen ortsfesten Zapfen (12) schwenkbar gelagert ist und dessen anderes Ende drehbar einen Perforiermesserzylinder (11) trägt, der mit einem ortsfest gelagerten Nutenzylinder (10) zusammenwirkt.

10. Vorrichtung nach einem der Ansprüche 4 bis 8, **dadurch gekennzeichnet, dass** zur gleichzeitigen gegenläufigen Einstellung zweier Zylinder (35, 36, 50, 51) ier Stellwelle (14) mit zwei Gewindespindeln (43, 44, 58, 59) mit gegenläufigen Gewinden versehen ist, jede Gewindespindel in ein ortsfestes Gewindelager (41, 42, 56, 57) eingreift und jedes Gewindelager an einem einen Zylinder (35, 36, 50, 51) tragenden Hebel (37, 38, 52, 53) befestigt ist.

11. Vorrichtung nach Anspruch 10, **dadurch gekennzeichnet, dass** an dem einen Hebel (53) ein Perforiermesserzylinder (51) und an dem anderen Hebel (52) ein Nutenzylinder (50) eines Längsperforiersystems gelagert ist.

12. Vorrichtung nach Anspruch 10, **dadurch gekennzeichnet, dass** zur Bildung eines Längsfalzsystems je ein Falzzylinder (35, 36) an einem Hebel (37, 38) gelagert ist.

13. Vorrichtung nach Anspruch 10, **dadurch gekennzeichnet, dass** zur Bildung einer Bahnabbremssystems eine vom Stellantrieb (17) angetriebene Gewindespindel (27) mit einem Anschlag (29) vorgesehen ist und gegen den Anschlag ein eine Bremsnocke (25) tragender Hebel (30) elastisch geführt ist.
